(19) Europäisches Patentamt / European Patent Office / Office européen des brevets

(11) **EP 3 260 504 B1**

(12) **EUROPÄISCHE PATENTSCHRIFT**

(45) Veröffentlichungstag und Bekanntmachung des Hinweises auf die Patenterteilung:
**14.08.2019 Patentblatt 2019/33**

(51) Int Cl.:
***C09D 9/00*** *(2006.01)*

(21) Anmeldenummer: **17177370.8**

(22) Anmeldetag: **22.06.2017**

(54) **VERFAHREN ZUM ENTLACKEN VON OBERFLÄCHEN**

METHOD FOR REMOVING VARNISH FROM SURFACES

PROCÉDÉ DE DÉCAPAGE DE SURFACES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.06.2016 DE 102016111487**

(43) Veröffentlichungstag der Anmeldung:
**27.12.2017 Patentblatt 2017/52**

(73) Patentinhaber: **ABL-TECHNIC Entlackung GmbH 88299 Leutkirch (DE)**

(72) Erfinder:
• **Vega, Antonio Nunez**
**92339 Beilngries (DE)**
• **Krings, Markus**
**87435 Kempten (DE)**

(74) Vertreter: **Otten, Roth, Dobler & Partner mbB Patentanwälte
Großtobeler Straße 39
88276 Berg / Ravensburg (DE)**

(56) Entgegenhaltungen:
**US-A- 2 975 140 US-A- 3 417 025**

**Beschreibung**

Die Erfindung betrifft ein Verfahren zum Entlacken von Oberflächen nach dem Oberbegriff des Anspruchs 1 sowie ein Verfahren zum Behandeln der Lackierung von Oberflächen nach dem Oberbegriff des Anspruchs 11 sowie eine Verwendung des Verfahrens zur Vorbehandlung von zu lackierenden Teilen nach dem Oberbegriff des Anspruchs 12.

Aus dem Stand der Technik sind verschiedene Entlackungsverfahren bekannt, welche unter anderem wässrige Lösungen eines alkalischen Hydroxids als Entlackungsmedium verwenden. Gemäß der Lehre der US 3 417 025 A liegt dabei die Konzentration der wässrigen Lösung von alkalischem Hydroxid bei maximal 35 Gewichtsprozent. Das Entlackungsmittel umfasst als Zusatzstoff 2-(2-Aminoethoxy)ethanol. Aber auch andere Beimengungen oder in zusätzlichen Verfahrensschritten eingesetzte Chemikalien werden ebenfalls eingesetzt, wie z.B. Gluconat (US 2 975 140 A); nach der DE 10 2009 17 802 A1 wird ein zusätzlicher Verfahrensschritt zum Entlacken vorgesehen, bei dem eigens Tenside Verwendung finden.

Aufgabe der Erfindung ist es, ein Entlackungsverfahren bereitstellen zu können, welches den Vorgang vereinfachen und insbesondere beschleunigen kann.

Die Aufgabe wird, ausgehend von einem Entlackungsverfahren der eingangs genannten Art, durch die kennzeichnenden Merkmale der Anspruchs 1 bzw. 11 und 12 gelöst.

Durch die in den abhängigen Ansprüchen genannten Maßnahmen sind vorteilhafte Ausführungen und Weiterbildungen der Erfindung möglich.

Das erfindungsgemäße Verfahren dient zum Entlacken von Oberflächen von Objekten. Dabei wird als Entlackungsmittel eine wässrigen Lösung wenigstens eines alkalischen Hydroxids verwendet und mit der zu entlackenden Oberfläche in Kontakt gebracht. Zum einen zeichnet sich das erfindungsgemäße Verfahren dadurch aus, dass das Entlackungsmittel in einer Hydroxid-Konzentration von 40-65 Gewichts-% verwendet wird. Die Arbeitstemperatur liegt ferner zwischen einschließlich 100°C bis hin zu einer Temperatur unterhalb der Schmelztemperatur des Objekts bzw. der zu entlackenden Oberflächen des Objekts, insbesondere wenigstens 1°C unterhalb dieser Schmelztemperatur. Bevorzugt wird in der Regel ein Temperaturbereich bis maximal 150°C eingesetzt.

Das erfindungsgemäße Verfahren zeichnet sich insbesondere in vorteilhafter Weise dadurch aus, dass Pigmente des zu entfernenden Lacks gelöst, gebunden bzw. entfernt werden. Pigmente sind farbgebende Substanzen, die in dem aufgetragenen Lack unlöslich sind. Die Erfindung ermöglicht, dass im Lack vorhandene wasserunlösliche Titanverbindungen wie Titandioxid sehr schnell in wasserlösliche Titanate umgewandelt werden, insbesondere bei Temperaturen über 100°C, womit zum Beispiel die Abreinigung von Pigmenten an der Oberfläche stark begünstigt wird.

Aufgrund der vergleichbar hohen Temperatur, bei welcher der Entlackungsvorgang abläuft, ist von einer vergleichsweise hohen Reaktionsgeschwindigkeit auszugehen. Die Entlackungszeit wird ebenfalls grundsätzlich dadurch vermindert, dass die Konzentrationen der alkalischen Hydroxide höher als bei aus dem Stand der Technik bekannten Standardentlackungsverfahren unter Einsatz von Laugen sind. Darüber hinaus ist in vorteilhafter Weise das Entlackungsmittel nicht brennbar, sodass von einer Erhöhung der Sicherheit ausgegangen werden kann. Zudem ist es auch nicht notwendig, technische Maßnahmen vorzubereiten, wie es etwa der Fall ist, wenn beim Ablauf des Prozessen mit Überdruckverhältnissen gerechnet werden muss.

Das zu entlackende Objekt wird in der Regel in ein Bad, welches das Entlackungsmittel enthält, eingetaucht. Das erfindungsgemäße Verfahren wiederum ermöglicht eine sehr einfache Badpflege, weil Lackreste, Partikel, Pigmente usw. sehr schnell abgetrennt werden können und sich an der Oberfläche des Bades bzw. der das Bad bildenden Flüssigkeit ansammeln.

Diese schnelle Abtrennung, gerade von Pigmenten, ermöglicht es, dass das zu entlackende Objekt, sofort oder nur mit geringer Reinigungsbehandlung wieder erneut lackiert werden kann. Bei der Reinigungsbehandlung kann es sich dabei zum Beispiel um eine rein mechanische Reinigung bzw. um einen einfachen Abwaschprozess, etwa mit Wasser, handeln. Dies zeichnet sich in vorteilhafter Weise gerade beim Einsatz des erfindungsgemäßen Verfahrens im Zusammenhang mit Kunststoffteilen aus, die zu entlacken und erneut zu lackieren sind.

Der Arbeitsbereich von Bädern befindet sich zwischen der Schmelzkurve und der Siedepunktkurve des Entlackungsmediums bzw. Entlackungsmittels. Die Konzentration von alkalischen Hydroxiden und die Arbeitstemperatur des Mediums beziehungsweise der Siedepunkt des Mediums werden so angepasst, dass die Verluste von Wasser durch Evaporation noch akzeptabel sind. Bei herkömmlichen Entlackungsverfahren nach dem Stand der Technik, bei denen eine Lauge verwendet wird, wird regelmäßig die Verdunstung von Wasser ab einer Temperatur von etwa 90°C so hoch, dass hier hohe energetische Verluste auftreten können und ggf. auch ein Druckbehälter nötig wird. Beim erfindungsgemäßen Verfahren hingegen kann in der Regel mit offenen Bädern gearbeitet werden da der Vorgang ohne Überdruck ablaufen kann.

Das erfindungsgemäße Verfahren bietet darüber hinaus den Vorteil, dass gerade bei der Entlackung von Kunstoffen es nicht notwendig ist, diese zu zerkleinern. Sofern nach dem bisherigen Stand der Technik die Qualität des herkömmlichen Entlackungsverfahrens dafür ausgereicht hat, wurden die entsprechenden zerkleinerten Kunststoffteile als Granulate weiterverarbeitet. Gemäß dem erfindungsgemäßen Verfahren können die Kunststoffteile also auch im Anschluss daran lackiert werden und behalten exakt ihre ursprl. Formgebung bei. Mitunter war es im Stand der Technik sogar üblich, fehllackierte Kunststoffbauteile überhaupt nicht zu entlacken, sondern durch Fachfirmen entsorgen zu lassen.

In vorteilhafter Weise kann sich bei dem erfindungsgemäßen Verfahren beim Entlacken metallischer Teile eine oxidische Schutzschicht bilden. Beim Tauchvorgang des Metalls in alkalische Salzlösungen kann ein thermisch erzeugter, dunkelbrauner bis schwarzer oxidischer Umwandlungsüberzug entstehen, ein sogenannter Brünierüberzug. Die Erfindung kombiniert somit in vorteilhafter Weise zwei Vorgänge, nämlich das Entlacken und das Brünieren.

Ein Brüniervorgang kann, ähnlich wie andere Passivierungsvorgänge, Konservierungsvorgänge oder sonstige Nachbehandlungen dafür sorgen, dass das Metall besser gegen Korrosion geschützt ist. Dadurch, dass Entlackung und Brünierung im vorliegenden Fall miteinander kombinierbar sind, kann Wasser eingespart werden, weil der gleiche Vorgang in einem Bad erfolgt. Zudem kann aber auch in einer entsprechenden Lackierwerkstatt, in der das Verfahren eingesetzt wird, Platz eingespart werden, weil lediglich ein Bad beide Vorgänge abarbeiten kann. Schließlich kann das Verfahren insofern vereinfacht werden, weil der zusätzliche Einsatz von Konservierungsstoffen nicht notwendig wird und auf diese verzichtet werden kann. Um den Brüniervorgang zu beeinflussen, können grundsätzlich verschiedene Salze zudosiert werden, bspw. Nitrite oder Nitrate.

Technisch ist die schnelle Abtrennung von Lackresten und Pigmenten gemäß der Erfindung vor allem deshalb möglich, weil hochkonzentrierte alkalische Hydroxydlösungen eingesetzt werden. Bei herkömmlichen Entlackungverfahren nach dem Stand der Technik, die mit Lauge arbeiten, ist die Konzentration der Lauge wesentlich geringer. Zudem bietet das erfindungsgemäße Verfahren den Vorteil, dass aufgrund des Dichteunterschieds zwischen der Dichte der Pigmente bzw. Lackreste und des Entlackungsmittels sich die Pigmente bzw. Lackreste folglich vom Entlackungsmittel sehr schnell in verschiedene Phase auftrennen und abgeschieden werden können. Der Dichteunterschied zwischen der Dichte der Pigment- bzw. Lackreste und der Dichte des flüssigen Entlackungsmittels (Fluids) ist aufgrund der hohen Hydroxid-Konzentration beim erfindungsgemäßen Entlackungsverfahren noch größer als bei herkömmlichen Entlackungsverfahren mit Laugen, sodass die Phasenauftrennung noch effektiver erfolgen kann. Wie bereits oben erläutert, ermöglicht diese schnelle Phasenabtrennung ebenfalls, dass die entsprechenden Tauchbäder einfacher gereinigt und die abgeschiedenen Pigmente besser abgeschöpft werden können. Lackreste aus der Entlackung steigen in der Regel an die Oberfläche der Entlackungsbäder, während das Entlackungsmittel darunter verbleibt.

Es ist also auch möglich, den Entlackungsvorgang dadurch gemäß der Erfindung zu vereinfachen, dass ein und dasselbe Bad für mehrere Entlackungsvorgänge eingesetzt werden kann, ohne dass das Bad dabei vorzeitig ausgetauscht werden muss. Bisher musste im Stand der Technik oftmals in Kauf genommen werden, dass es zu einer teilweisen Mischung der bei der Entlackung abgelösten Pigmente und Lackreste kam, insbesondere dass sich auch Reste am Boden des Behälters abgesetzt haben, sodass die Reinheit und Qualität des Bades von Entlackungsvorgang zu Entlackungsvorgang sich rapide verschlechterte, bis schließlich eine saubere Entlackung nur noch dann möglich war wenn das Bad gewechselt wurde. Dies war mitunter bereits nach sehr wenigen Entlackungsvorgängen, zum Teil sogar nach einem Entlackungsvorgang notwendig.

Für die Abtrennung von Stoffen gemäß der Stokesgleichung für die Steig- bzw. Sinkgeschwindigkeit gilt, dass diese proportional zum Dichteunterschied zwischen dem Medium und den Partikeln oder Tröpfchen ist, die sich in dem Medium befinden ist, wobei:

$$v_p = \frac{2r^2 g(\rho_p - \rho_f)}{9\eta}$$

mit:

$v_p$ : Sedimentationsgeschwindigkeit;
$g$ : Erdbeschleunigung;
$r$ : Radius der Partikel;
$\rho_p$ : Dichte des Partikels;
$\rho_f$ : Dichte des Fluides;
$\eta$ : dynamische Viskosität des Fluides.

Darüber hinaus hängt die dynamische Viskosität auch von der Temperatur ab, sodass der Arbeitstemperaturbereich über 100°C sich bei der Erfindung vorteilhaft auf eine Abtrennung auswirken kann. Die Phase, welche Lackreste enthält und sich oben abgesetzt hat, so kann abgeschöpft und gegebenenfalls noch einmal filtriert werden, um Reste des Entlackungsmittels zurückzugewinnen. Hier wirkt sich auch der Dichteunterschied zwischen dem Hydroxyd-Medium und den Lackresten vorteilhaft aus. Eine Filtrierung kann ggf. auch mittels Zentrifugierung erfolgen.

Gemäß einem vorteilhaften Ausführungsbeispiel der Erfindung kann das Verfahren dahingehend vereinfacht werden, dass zum Entlackungsmittel keine Zusatzstoffe wie Tenside als Additiv oder auch kein organisches Additiv hinzugefügt wird. Es ist gemäß einem Ausführungsbeispiel der Erfindung auch nicht notwendig, zusätzliche Entlackungsschritte durchzuführen, wie zum Beispiel ein zusätzlicher Entlackungsschritt unter Verwendung von Tensiden. Um die Reaktivität zu erhöhen, wird ein aliphatischer Alkohol als Additiv verwendet, insbesondere 2-(2-Aminoethoxy)ethanol, wodurch zum Beispiel die Entlackungszeiten verringert werden.

Für das Entlackungsmittel können grundsätzlich verschiedene Hydroxide eingesetzt werden. Insbesondere ist es auch denkbar, das Entlackungsmittel unter Verwendung mehrerer unterschiedlicher Hydroxide herzustellen. In der Regel eignet sich insbesondere Kaliumhydroxid dazu, im Zusammenhang mit den erfindungsgemäßen Verfahren eigesetzt zu werden.

Die Arbeitstemperatur liegt zunächst in einem Temperaturbereich zwischen 65°C und dem Siedepunkt des Entlackungsmittels, der bei ca. 300°C zu erwarten ist. Erfindungsgemäß wird als Obergrenze ein Punkt maximal 1°C unterhalb der Schmelztemperatur oder der Wärmeformbeständigkeitstemperatur des zu entlackenden Objektes bzw. der Oberfläche des zu entlackenden Objektes gewählt, damit diese nicht angegriffen werden bzw. beschädigt wird. Sehr gute Ergebnisse, vor allem eine schnell ablaufende Reaktion, kann ab einer Temperatur von etwa 100°C erwartet werden. Besonders gute Ergebnisse lassen sich insbesondere bei einem Ausführungsbeispiel der Erfindung erzielen, wenn der Temperaturbereich zwischen 100°C und 130°C liegt. Das Entlackungsmittel ist nicht brennbar.

Oben wurde zunächst die Möglichkeit genannt, die zu entlackenden Objekte in ein Bad einzutauchen. Üblicherweise kann diese Methode etwa bei zu entlackenden Kunststoffstoßstangen eingesetzt werden. Bei größeren zu entlackenden Bauteilen können die Teile auch mit dem Entlackungsmittel bespritzt werden. Auch ein Fluten der Teile ist grundsätzlich möglich. Die Wahl des Verfahrens hängt insbesondere von der Größe und der Geometrie des zu entlackenden Objektes ab. Falls die Kunststoffe für die Herstellung von Granulat entlackt werden, kann man diese Kunststoffe vor dem Lackieren zerkleinern bzw. schreddern.

Bei einer bevorzugten Weiterbildung der Erfindung wird nach der Behandlung mit dem Entlackungsmittel ein Spülvorgang durchgeführt, insbesondere mit Wasser, um die Lackreste zu entfernen. Insbesondere dann, wenn die Teile nach dem Entlacken neu lackiert werden sollen, ist es vorteilhaft, eventuell noch vorhandene Lackreste zu entfernen; hierbei kann es sich auch um an der Oberfläche des zu entlackenden Werkstücks haftende Lack- bzw. Pigmentreste handeln, die sich erst dann an der Oberfläche festgesetzt haben, als das Werkstück aus dem Bad entnommen wurde. Ferner können auch sonstige mechanische Reinigungsverfahren angewendet werden. Neben einer Spülung mit Wasser kann die Reinigung auch durch Anwendung von Hochdruckwasser, vorzugsweise bei einem Druck zwischen 50 und 300 bar, besonders bevorzugt zwischen 150 und 200 bar, erfolgen. Darüber hinaus ist es möglich, ein Ultraschallbad einzusetzen um einzelne Lackreste und Pigmente von der Oberfläche zu entfernen. Durch Kavitation entstehen in mikroskopisch kleinen und nach kurzer Zeit zerplatzenden Gas- bzw. Luftblasen sehr hohe Drücke, die dafür sorgen, dass die Lackreste von der Oberfläche entfernt werden und Haftungskräfte zwischen den Lackresten und der Oberfläche überwunden werden.

Da das Bad mit dem Entlackungsmittel in einer Lauge erfolgt ist, kann nach dem Spül- oder Reinigungsvorgang ggf. noch ein weiterer Neutralisationsvorgang vorgesehen sein, um alkalische Reste des Entlackungsmittels zu neutralisieren. Ggf. kann auch nach dem Spül- oder Reinigungsvorgang bzw. nach dem Neutralisationsvorgang noch ein Trocknungsvorgang angeschlossen werden. Es ist auch denkbar, dass der Neutralisationsvorgang durch einen Spülvorgang in bereits ausreichendem Maße ersetzt ist, das heißt durch die Zugabe von Wasser wurden Laugenreste bereits ausreichend neutralisiert oder weggespült.

Insbesondere auf vorteilhafte Weise eignet sich das vorgestellte Verfahren nicht nur zur Reinigung von Metalloberflächen bzw. von Metallgegenständen, sondern auch gerade für Kunststoffteile und Kunststoffoberflächen.

Insbesondere kann das erfindungsgemäße Verfahren bzw. das Verfahren gemäß einem der Ausführungsbeispiele so angewendet werden, dass anschließend keine weitere Behandlung der Oberfläche notwendig ist, sodass unmittelbar danach eine neue Lackierung durchgeführt werden kann. Es ist also möglich, sich auf das Entlackungsverfahren zu beschränken, bei dem ggf. bei einigen Metallteilen auch ein Brünierungsvorgang gleichzeitig erfolgt und wobei lediglich, sofern notwendig, mechanisch einzelne Reste noch entfernt werden, indem z.B. ein Sprühvorgang, ein Abspülen mit unter hohem Druck stehendem Wasser und ggf. ein Trocknungsvorgang oder ein Neutralisationsvorgang erfolgt. Eine weitere chemische Behandlung zum Ablösen von Pigmenten oder dergleichen ist jedoch nicht mehr notwendig. Das Verfahren gemäß dem Ausführungsbeispiel ist also besonders einfach und erfordert einen vergleichsweise geringen operativen Aufwand.

Außerdem kann das erfindungsgemäße Verfahren bzw. ein Verfahren gemäß einem der Ausführungsbeispiele als Vorbehandlungsstufe in Lackiereren verwendet werden, um entsprechende Objekte zu reinigen und zu entfetten. Die nicht lackierten Teile können entfettet und gereinigt werden, während die lackierten Teile zusätzlich entlackt werden. Folglich kann eine entsprechende Entlackungsanlage auch zusätzlich zum Reinigen und Entfetten nicht lackierter Teile eingesetzt werden.

Ausführungsbeispiele

Ausführungsbeispiele der Erfindung werden in den Zeichnungen dargestellt und nachstehend unter Angabe weiterer Einzelheiten und Vorteile näher erläutert.

Im Einzelnen zeigen:

Figur 1     eine schematische Darstellung des Verfahrens gemäß der Erfindung,

Figur 2     eine schematische Darstellung des Arbeitsbereichs

Figur 3     die Schmelztemperaturen verschiedener Kunststoffe, sowie

Figur 4      die Wärmeformbeständigkeitstemperauren verschiedener Kunststoffe.

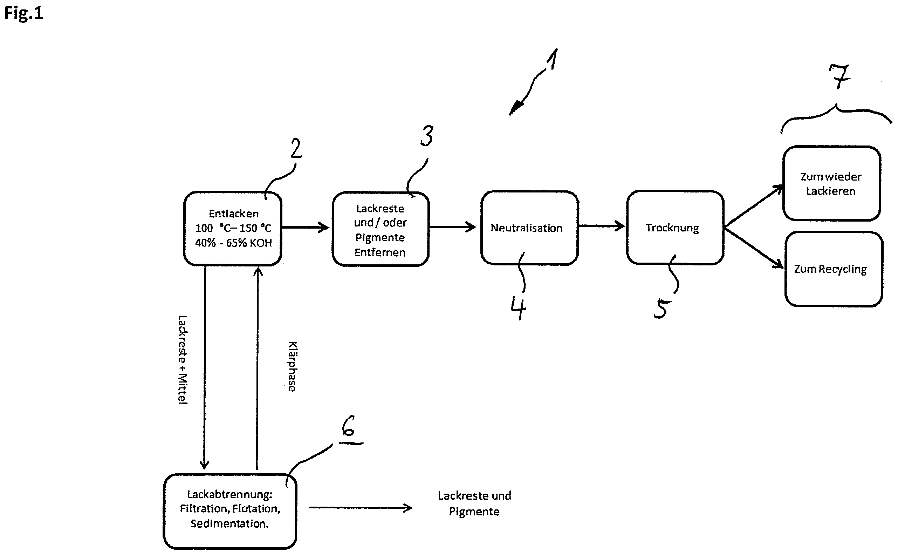

In Figur 1 ist schematisch dargestellt, wie ein Verfahren 1 gemäß der Erfindung ablaufen kann, z. B. in einem Tauchbad. Hier erfolgen im gleichen Verfahrensschritt 2 ein Entlackungs- und ein Brüniervorgang, und zwar durch Baden des zu entlackenden Teils in einer wässrigen Lösung eines alkalischen Hydroxids, wie z. B. KOH. Die Hydroxidkonzentration liegt bei 40 Gewichtsprozent bis 65 Gewichtsprozent, wobei eine Arbeitstemperatur von mindestens 100°C, bevorzugt bis 130°C vorgesehen ist. Gleichzeitig können bestimmte metallische Teile brüniert werden, um eine Schutzschicht zu erzeugen, was automatisch mit dem Entlackungsvorgang erfolgt. Danach wird das zu entlackende Teil dem Bad entnommen, und es werden die Lackreste entfernt (Verfahrensschritt 3), z.B. durch Abspritzen, im Ultraschall-Bad oder dergleichen. Anschließend erfolgt (Verfahrensschritt 4) ein Neutralisationsvorgang, um einzelne, noch bestehende Laugenreste noch zu neutralisieren, und danach ein Trocknungsvorgang 5, um das verbliebene Wasser bzw. die Feuchtigkeit von dem entlackten Objekt zu entfernen.

Im Verfahrensschritt 7 kann das Objekt wieder lackiert werden oder gegebenenfalls zum Recycling gelangen.

Die Lackreste, die beim ursprünglichen Entlacken bereits gelöst wurden, können durch Abtrennungsverfahren 6, insbesondere Flotation oder Sedimentation aus dem Bad entfernt werden. Dies geschieht in einer Klärphase, nach der das Bad unmittelbar wieder eingesetzt werden kann.

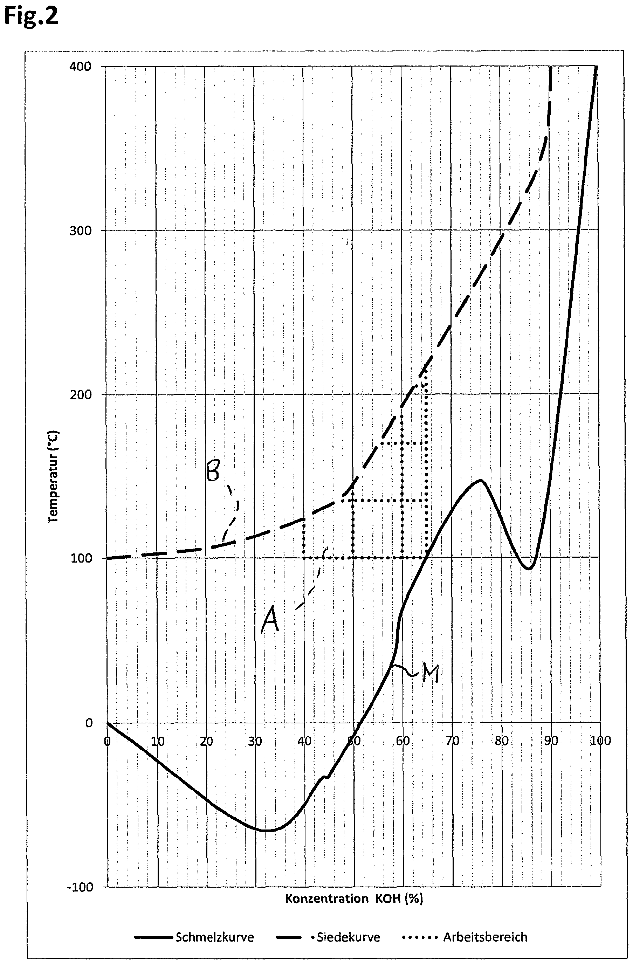

Figur 2 zeigt einen typischen Arbeitsbereich A (gepunkteter Bereich) zwischen Schmelzkurve M und Siedekurve B, hier für eine KOH-Konzentration ab 40 Gew.-% bis 65 Gew.-% sowie bei Arbeitstemperaturen ab 100°C.

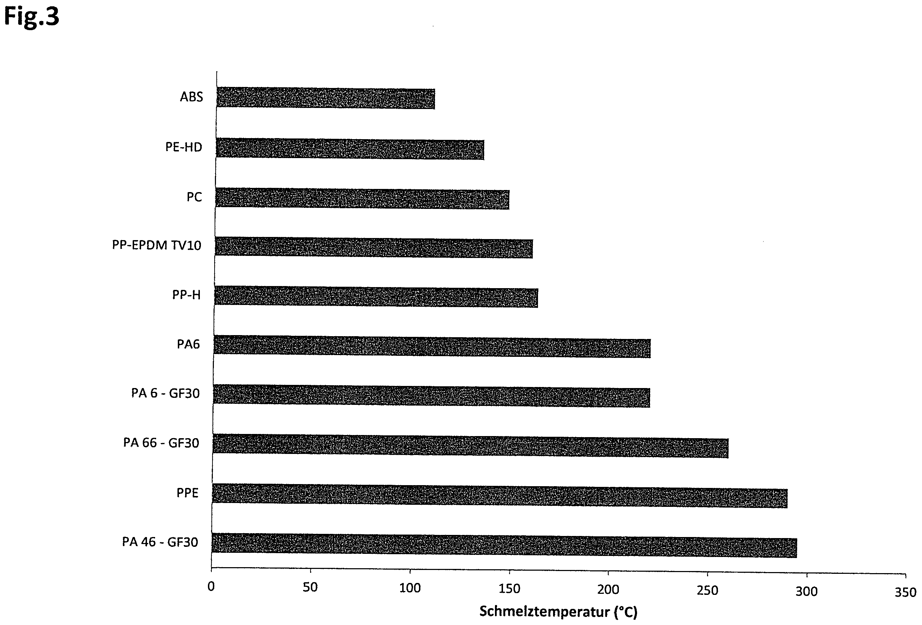

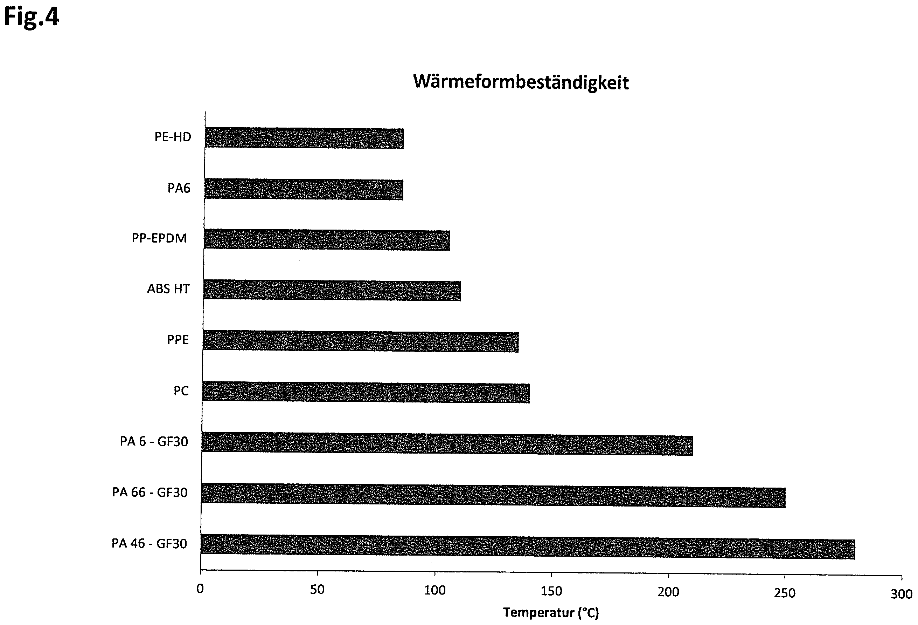

Die Figuren 3 und 4 zeigen Schmelztemperaturen und Wärmeformbeständigkeitstemperaturen für typische Kunststoffe, die mit dem Verfahren entlackt werden können:

     PE-HD: Polyethylen (high density),
     PA: Polyamid,
     PP-EPDM: Polypropylen - Ethylen-Propylen-Dien-Kautschuk,
     ABS HT: Acrylnitril/Butadien/Styrol (wärmeformbeständig),
     PPE: Polyphenylenether,
     PC: Polycarbonat.

Weitere Ausführungsbeispiele:

Die nachfolgenden %-Angaben beziehen sich auf Gewichtsprozent.

Beispiel 1: Mit einer wässrigen Lösung aus 50% KOH. 2% Diethanolamin und 48% Wasser werden bei 115°C Stoßstangen aus PP-EPDM in circa 15 Minuten entlackt, die nach Abspritzen und Trocknen wieder lackiert werden können.

Beispiel 2: Nach einem Sprühvorgang mit Hochdruckwasser nach der Entlackung mit 50% Kaliumhydroxid, 2,5% Phenoxyethanol, 2,5% Diethylenglykol und 45% Wasser bei 105°C erzielt man in circa 20 Minuten besonders saubere Oberflächen (frei von weißgrau Rückständen) bei der Entlackung von KunststoffStoßstangen aus PP-EPDM. Mit dem Standardlaugenverfahren mit 5 %bis 20% KOH und organischen Additiven bei 85°C bleiben nach mehreren Stunden weiß-graue Rückstände zurück. Mit denselben Arbeitsbedingungen werden Lackierhilfsmittel (Türhalter) der Autoindustrie mit circa 5 mm Lackstärke von KTL Lack in 12 Stunden entlackt und brüniert, während für dieselben Teile bei 12% KOH und 2,5%Phenoxyethanol und 2,5% Diethylenglykol und 80% Wasser bei 85°C fünf Tage benötigt werden und diese Teile im Anschluss mit einem Passivierungsmittel gegen Rost behandelt werden müssen.

Beispiel 3: Mit 50% KOH und 50% ohne Additive werden bei 105°C Kunststoffteile aus PP-EPDM in circa 120 Minuten entlackt.

Beispiel 4: Mit 58% KOH, 2% NaOH, 2% Diethylenglykol und 38% Wasser bei 150°C können Stahlteile in circa 25 Minuten entlackt werden und eventuell gleichzeitig brüniert werden.

Beispiel 5: Mit 50% KOH, 2% NaOH, 2%Ditethylenglykol, 1% Diethanolamin und 45% Wasser werden Türgriffe aus Polyamid bei 120°C in ca. 25 Minuten entlackt.

Bezugszeichenliste:

| 1 | gesamtes Entlackungsverfahren |
|---|---|
| 2 | Bad zum Entlacken und Brünieren |
| 3 | Entfernen von Lackresten |
| 4 | Neutralisation |
| 5 | Trocknung |
| 6 | Lackabtrennung / Filtration |
| A | Arbeitsbereich |
| B | Siedekurve |
| M | Schmelzkurve |

**Patentansprüche**

1. Verfahren zum Entlacken von Oberflächen von Objekten, wobei als Entlackungsmittel eine wässrige Lösung wenigstens eines alkalischen Hydroxids verwendet und mit der zu entlackenden Oberfläche in Kontakt gebracht wird, wobei als Entlackungsmittel eine 40 Gew.-%tige bis 65 Gew.-%ige wässrige Hydroxid-Lösung bei einer Temperatur von 100°C bis zu einer Temperatur unterhalb der Schmelztemperatur des Objekts und/oder der Oberfläche des Objektes verwendet wird, um Pigmente des zu entfernenden Lacks zu lösen und/oder zu binden und/oder zu entfernen, **dadurch gekennzeichnet, dass** zum Entlackungsmittel außer genau einem aliphatischen Alkohol, vorzugsweise 2-(2-Aminoethoxy)ethanol, kein Additiv verwendet wird.

2. Verfahren nach einem der vorgenannten Ansprüche, **dadurch gekennzeichnet, dass** im Lack vorhandene wasserunlösliche Titanverbindungen in wasserlösliche Titanate umgewandelt werden,.

3. Verfahren nach einem der vorgenannten Ansprüche, **dadurch gekennzeichnet, dass** als Entlackungsmittel ein solches verwendet wird, das wenigstens das Hydroxid Kaliumhydroxid aufweist.

4. Verfahren nach Anspruch 1, **dadurch gekennzeichnet, dass** das Entlackungsmittel bei einer Temperatur bis 150°C verwendet wird.

5. Verfahren nach einem der vorgenannten Ansprüche, **dadurch gekennzeichnet, dass** das Entlackungsmittel bei einer Temperatur von 100°C bis 130°C verwendet wird.

6. Verfahren nach einem der vorgenannten Ansprüche, **dadurch gekennzeichnet, dass** die zu entlackende Oberfläche mit dem Entlackungsmittel getaucht und/oder gespritzt und/oder geflutet wird.

7. Verfahren nach einem der vorgenannten Ansprüche, **dadurch gekennzeichnet, dass** nach der Behandlung mit dem Entlackungsmittel ein Spülvorgang, insbesondere mit Wasser, durchgeführt wird, um Lackreste zu entfernen.

8. Verfahren nach einem der vorgenannten Ansprüche, **dadurch gekennzeichnet, dass** nach der Behandlung mit dem Entlackungsmittel ein mechanischer Reinigungsvorgang durchgeführt wird, insbesondere durch Anwendung von Hochdruckwasser, vorzugsweise bei einem Druck von 50 bar bis 300 bar insbesondere 150 bar bis 200 bar und/oder durch Baden in einem Ultraschallbad, um Pigmente und/oder Lackreste zu entfernen.

9. Verfahren nach einem der vorgenannten Ansprüche, **dadurch gekennzeichnet, dass** nach dem Spül- und/oder Reinigungsvorgang ein Neutralisationsvorgang zur Neutralisation (4) alkalischer Reste des Entlackungsmittels und/oder ein Trocknungsvorgang durchgeführt wird/werden.

10. Verfahren nach einem der vorgenannten Ansprüche, **dadurch gekennzeichnet, dass** als Objekt ein solches mit einer Kunststoffoberfläche und/oder aus Kunststoff entlackt wird.

11. Verfahren zum Behandeln der Lackierung von Oberflächen von Objekten, **dadurch gekennzeichnet, dass** ein Verfahren zum Entlacken nach einem der vorgenannten Ansprüche und anschließend, ohne weitere Behandlung der Oberfläche, eine neue Lackierung durchgeführt wird.

12. Verwendung eines Verfahren nach einem der vorgenannten Ansprüche zur Reinigung und/oder Entfettung von Objekten, nämlich von entlackten Objekten in Lackierungsprozessen.

## Claims

1. A method for removing varnish from surfaces of objects, wherein an aqueous solution of at least one alkaline hydroxide is used as the varnish removal agent and brought into contact with the surface from which varnish is to be removed, wherein a 40% w/w to 65% w/w aqueous hydroxide solution at a temperature of 100°C to a temperature below the melting temperature of the object and/or the surface of the object is used as the varnish removal agent in order to dissolve and/or bind and/or remove pigments of the varnish to be removed, **characterised in that** no additive is used for the varnish removal agent except exactly one aliphatic alcohol, preferably 2-(2-aminoethoxy)ethanol.

2. The method according to any of the preceding claims, **characterised in that** water-insoluble titanium compounds present in the varnish are converted into water-soluble titanates.

3. The method according to any of the preceding claims, **characterised in that** the varnish removal agent used is one containing at least the hydroxide potassium hydroxide.

4. The method according to claim 1, **characterised in that** the varnish removal agent is used at a temperature up to 150°C.

5. The method according to any of the preceding claims, **characterised in that** the varnish removal agent is used at a temperature of 100°C to 130°C.

6. The method according to any of the preceding claims, **characterised in that** the surface from which varnish is to be removed is immersed in and/or sprayed with and/or flooded with the varnish removal agent.

7. The method according to any of the preceding claims, **characterised in that**, after the treatment with the varnish removal agent, a rinsing process, in particular with water, is carried out to remove varnish residues.

8. The method according to any of the preceding claims, **characterised in that**, after the treatment with the varnish removal agent, a mechanical cleaning process is carried out, in particular by use of high-pressure water, preferably at a pressure of 50 bar to 300 bar, in particular 150 bar to 200 bar, and/or by bathing in an ultrasonic bath to remove pigments and/or varnish residues.

9. The method according to any of the preceding claims, **characterised in that** after the rinsing and/or cleaning process a neutralisation process for neutralisation (4) of alkaline residues of the varnish removal agent and/or a drying process is/are performed.

10. The method according to any of the preceding claims, **characterised in that** the object from which varnish is to be removed is one with a plastic surface and/or made of plastic.

11. A method for treating the varnish of surfaces of objects, **characterised in that** a method for removing varnish according to any of the aforementioned claims and then, without further treatment of the surface, a new varnishing is performed.

12. The use of a method according to any of the preceding claims for the cleaning and/or degreasing of objects, namely of objects from which the varnish has been removed, in varnishing processes.

**Revendications**

1. Procédé de décapage de surfaces d'objets, dans lequel une solution aqueuse d'au moins un hydroxyde alcalin est utilisée comme agent de décapage et mise en contact avec la surface à décaper, dans lequel une solution d'hydroxyde aqueuse à entre 40 % et 65 % en poids est utilisée comme agent de décapage à une température de 100 °C jusqu'à une température inférieure à la température de fusion de l'objet et/ou de la surface de l'objet afin de dissoudre et/ou lier et/ou éliminer les pigments de la peinture à éliminer, **caractérisé en ce qu'**à part précisément un alcool aliphatique, de préférence, le 2-(2-aminoéthoxy)éthanol, aucun additif n'est utilisé pour l'agent de décapage.

2. Procédé selon une des revendications précédentes, **caractérisé en ce que** les composés de titane insolubles dans l'eau contenus dans la peinture sont convertis en titanates solubles dans l'eau.

3. Procédé selon une des revendications précédentes, **caractérisé en ce qu'**un agent présentant au moins comme hydroxyde l'hydroxyde de potassium est utilisé comme agent de décapage.

4. Procédé selon la revendication 1, **caractérisé en ce que** l'agent de décapage est utilisé à une température allant jusqu'à 150 °C.

5. Procédé selon une des revendications précédentes, **caractérisé en ce que** l'agent de décapage est utilisé à une température de 100 °C à 130 °C.

6. Procédé selon une des revendications précédentes, **caractérisé en ce que** la surface à décaper est trempée et/ou pulvérisée et/ou inondée avec l'agent de décapage.

7. Procédé selon une des revendications précédentes, **caractérisé en ce que**, après le traitement avec l'agent de décapage, un processus de rinçage, en particulier à l'eau, est effectué pour éliminer les résidus de peinture.

8. Procédé selon une des revendications précédentes, **caractérisé en ce que**, après le traitement avec l'agent de décapage, un nettoyage mécanique est effectué, en particulier en utilisant de l'eau à haute pression, de préférence à une pression de 50 à 300 bar, en particulier de 150 à 200 bar et/ou en procédant à une immersion dans un bain à ultrasons, pour éliminer les pigments et/ou les résidus de peinture.

9. Procédé selon une des revendications précédentes, **caractérisé en ce que**, après le processus de rinçage et/ou de nettoyage, un processus de neutralisation pour la neutralisation (4) des résidus alcalins de l'agent de décapage et/ou un processus de séchage est/sont effectués.

10. Procédé selon une des revendications précédentes, **caractérisé en ce que** l'objet décapé est un objet avec une surface en matière plastique et/ou constitué de matière plastique.

11. Procédé de traitement du revêtement de surfaces d'objets, **caractérisé en ce qu'**un procédé de décapage selon une des revendications précédentes est effectué, puis, sans traitement supplémentaire de la surface, un nouveau peinturage est réalisé.

**12.** Utilisation d'un procédé selon une des revendications précédentes pour le nettoyage et/ou le dégraissage d'objets, à savoir d'objets décapés dans des processus de peinturage.

Fig.1

EP 3 260 504 B1

**1**

**2** Entlacken
100 °C – 150 °C
40% - 65% KOH

**3** Lackreste
und / oder
Pigmente
Entfernen

**4** Neutralisation

**5** Trocknung

**7** Zum wieder Lackieren

Zum Recycling

Lackreste + Mittel

Klärphase

**6** Lackabtrennung:
Filtration, Flotation,
Sedimentation.

Lackreste und
Pigmente

# Fig.2

Fig.3

ABS

PE-HD

PC

PP-EPDM TV10

PP-H

PA6

PA 6 - GF30

PA 66 - GF30

PPE

PA 46 - GF30

Schmelztemperatur (°C)

0    50    100    150    200    250    300    350

Fig.4

**IN DER BESCHREIBUNG AUFGEFÜHRTE DOKUMENTE**

**In der Beschreibung aufgeführte Patentdokumente**

- US 3417025 A
- US 2975140 A
- DE 10200917802 A1